Europäisches Patentamt

European Patent Office

Office européen des brevets

(11) Veröffentlichungsnummer: **0 133 443**
**A2**

## (12) EUROPÄISCHE PATENTANMELDUNG

(21) Anmeldenummer: 84101367.5

(22) Anmeldetag: 10.02.84

(51) Int. Cl.⁴: **F 24 C 15/08**

(30) Priorität: 08.08.83 DE 3328591

(43) Veröffentlichungstag der Anmeldung:
27.02.85 Patentblatt 85/9

(84) Benannte Vertragsstaaten:
BE FR GB IT NL SE

(71) Anmelder: Philipp Kreis GmbH & Co. TRUMA-Gerätebau
Neumarkter Strasse 34-36
D-8000 München 80(DE)

(72) Erfinder: Mossbach, Wilhelm
Rotbuchenstrasse 37
D-8011 Kirchseeon(DE)

(74) Vertreter: Hain, Leonhard, Dipl.-Ing.
Tal 18/IV
D-8000 München 2(DE)

(54) Raumheizgerät für Kleinräume.

(57) Bei einem Raumheizgerät für Kleinräume, insbesondere Wohnwagen, Fahrzeug- und Schiffskabinen od. dgl., mit gegen den zu beheizenden Raum abgeschlossenem Verbrennungsraum, weist der Verbrennungsraum unten einen Aufsetzflansch (10) auf, an dem eine zur Aufnahme eines Brenners (16) ausgebildete Bodenwanne (11) mit ihrem Anschlußflansch (12) befestigt und mit einer seitlichen Anschlußöffnung (20) für eine Zuluftleitung versehen ist.

EP 0 133 443 A2

./...

0133443

Anmelder: Philipp Kreis GmbH & Co. TRUMA-Gerätebau
Neumarkter Straße 34-36, 8000 München 80
Titel: Raumheizgerät für Kleinräume

**Beschreibung**

Die Erfindung betrifft ein mit gasförmigem oder vergastem flüssigen Brennstoff befeuertes Raumheizgerät für Kleinräume, insbesondere Wohnwagen, Fahrzeug- und Schiffskabinen od.dgl. gemäß dem Oberbegriff des Patentanspruches 1.

Die bekannten Raumheizgeräte dieser Art weisen einen gegen den zu beheizenden Raum abgeschlossenen Verbrennungsraum auf, dem die Zu- bzw. die Verbrennungsluft durch einen unter den Raumboden ragenden Eintrittsstutzen zugeführt wird. Dabei sind die Raumheizgeräte auf dem Fußboden so aufgestellt, daß der aufrechtführende Verbrennungsraum vom Fußboden hochsteht und sich ein als Wärmetauscher ausgebildeter Verbrennungsgaskanal, beispielsweise aus einem waagrechten Querkanal sowie einem abwärtsführenden Kanalteil, daran anschließt. Am Ende dieses Kanalteiles ist ein Austrittsstutzen zum Anschluß einer Abgasleitung ausgebildet, die entweder durch eine Raumwand oder als Abgaskamin durch die Raumdecke verlegt ist. Die Zuführung der Zuluft durch den Raumboden ist dann mit Schwierigkeiten verbunden, wenn der Bodendurchbruch wegen wichtiger Fahrzeugbodenelemente nicht an der gewünschten Stelle angebracht werden kann oder wenn diese so nahe an diesem Durchbruch liegen, daß sie die Zuluftströmung ungünstig beeinflussen. Eine Boden-Zuluft ist außerdem bei Schiffskabinen und höher gelegenen Fahrzeugkabinen meist überhaupt nicht möglich. Schließlich hat die Zuluftführung durch den Boden einen tiefliegenden Brenner und damit auch eine Heizflächenausdehnung bis zum Fußboden zur Folge. Dies bedingt wiederum besondere Abdichtungs- und Schutzmaßnahmen. Eine tiefliegende Heizfläche ist auch weniger wirksam.

Der Erfindung liegt daher die Aufgabe zugrunde, ein Raumheizgerät für Kleinräume zu schaffen, bei dem die Zu- bzw. Verbrennungsluftführung weitgehend unabhängig von der Heizgeräteaufstellung ist, die Aufstellungs- und Montagearbeiten erleichtert und schließlich noch die Heizleistung erhöht wird.

Diese Aufgabe wird gemäß der Erfindung an einem Raumheizgerät gemäß dem Oberbegriff des Patentanspruches 1 durch die kennzeichnenden Merkmale dieses Patentanspruches gelöst.

Durch die Anbringung einer Bodenwanne an einem Heizgerät besteht die Möglichkeit, an diesem Heizgerät oberhalb des Fußbodens eine Anschlußmuffe für die Zuluftleitung auszubilden, die dann an dieser oder auch an jeder anderen Stelle durch den Fußboden oder durch eine Seitenwand verlegt werden kann. Die Aufstellung des Heizgerätes ist somit weitgehend unabhängig von dem notwendigen Boden- oder Wanddurchbruch für die Zuluft. Andererseits können nunmehr die Zuluft- und Abgasleitungen auch an einen gemeinsamen Außenwandkasten angeschlossen werden. Durch die erfindungsgemäße Bodenwanne wird die Heizfläche höher vom Fußboden abgesetzt und dadurch ihre Heizwirkung verbessert. Weil sich die Bodenwanne als Teil des Heizgerätes unterhalb des Brenners befindet, entstehen keine Abdichtungsschwierigkeiten gegenüber dem Raum. Die Bodenwanne eignet sich auch bestens zur Lagerung des Brenners. Auf diese Weise läßt sich eine vorteilhafte Montageeinheit bilden, durch die sowohl das Aufstellen als auch der Zusammenbau, das Reparieren und das Prüfen dieses Gerätes wesentlich erleichtert werden.

Weitere Merkmale der Erfindung sind in Unteransprüchen beansprucht.

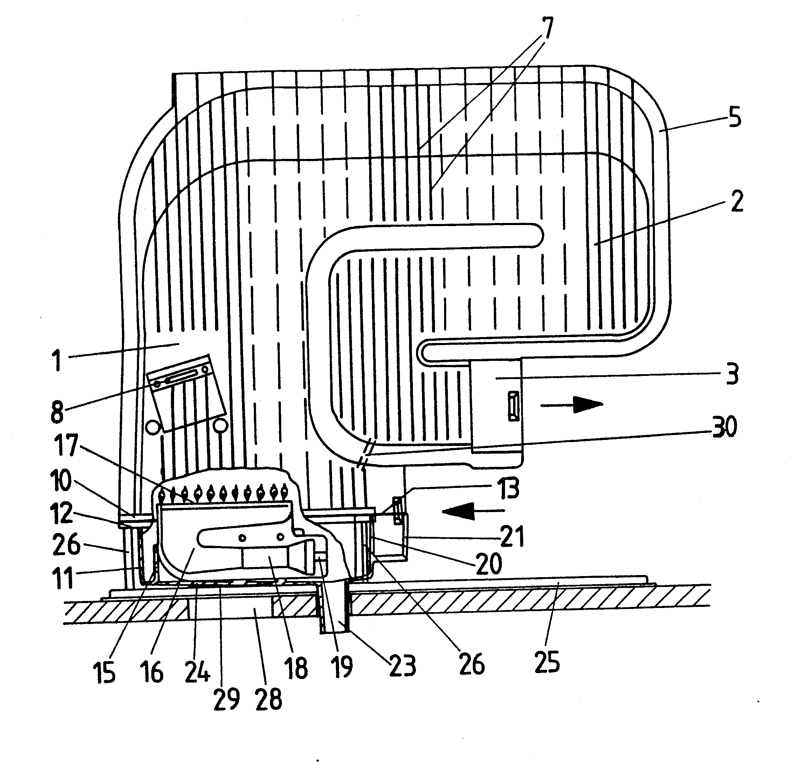

Die Erfindung wird nachfolgend anhand eines Ausführungsbeispiels eines Raumheizgerätes mit mäanderförmigem Wärmetauscher, das auch in der Zeichnung schematisch und in Seitenansicht dargestellt ist, näher beschrieben:

Dieses Raumheizgerät besteht aus einem zweischaligen Gehäuse, das einen aufsteigenden Verbrennungsraum 1, einen mäanderförmig nach unten abfallenden Wärmetauscher 2 und eine waagrecht endende Abgasanschlußmuffe 3 bildet. Die beiden Schalen sind entlang eines Stoßes 5 miteinander abgedichtet und vernietet. In Vertikalrichtung verlaufende Außenlamellen 7 (nur teilweise gezeichnet) dienen zur Verstärkung des am Heizgerät hochsteigenden Luftstromes. Am Verbrennungsraum 1 ist noch ein Sichtfenster 8 zur Flammenkontrolle vorgesehen. Der Verbrennungsraum endet unten mit einem Aufsetzflansch 10, an den eine Bodenwanne 11 mit ihrem Anschlußflansch 12, vorteilhaft unter Zwischenlage einer flammensicheren Abdichtung 13, angesetzt ist. Diese beiden Flansche sind miteinander verschraubt und daher zu Montage- oder Reparaturzwecken auch lösbar. Die allseitig abgeschlossene Bodenwanne 11 weist zur Lagerung und Befestigung eines Brenners 16 Zentriereinbauten 15 auf, von denen nur ein Teil zu sehen ist. Der Flammengrill 17 des Brenners ragt dabei etwas in den Verbrennungsraum des Heizgerätes hinein und sein düsenförmig ausgebildetes Brennerrohr 18 den Bodenwannenboden entlang und endet mit seiner Öffnung 19 nahe einer Zuluftöffnung 20, die von einer Zuluftanschlußmuffe 21 begrenzt ist. Diese Zuluftöffnung und -Muffe wird zum Teil von der Bodenwanne und zum Teil vom anschließenden Verbrennungsraumgehäuse gebildet. Von der Bodenwanne führt noch ein Kondenswasserablaufrohr 23 durch den Fußboden nach unten. Eine weitere Kondenswasserbohrung 30 verbindet den Abgaskanal mit der Bodenwanne.

Beim gezeigten Ausführungsbeispiel liegt die Bodenwanne nicht auf dem Fußboden auf. Daher kann ihre Bodenwand 24 jede passende Form, z.B. auch ein zum Ablaufrohr gerichtetes Gefälle,aufweisen. Die bodenfreie Anbringung der Bodenwanne wird durch Stützen 26, die an ihrem Anschlußflansch 12 angreifen und zweckmäßig von einer Grundplatte 25 hochstehen, erreicht.

Es hat sich als vorteilhaft ergeben, im Fußboden eine Durchbrechung 28 und in der Grundplatte einen Drehverschluß 29 vorzusehen, um je nach Öffnung dieses Verschlusses mehr oder weniger Frischluft von unterhalb des Heizgerätes in den Raum eindringen zu lassen.

Beim gezeigten Ausführungsbeispiel befinden sich die Abgas-Anschlußmuffe 3 und die Zuluft-Anschlußmuffe 13 zwar etwas versetzt, jedoch gleichgerichtet untereinander, so daß die daran anzuschließenden Leitungen zunächst nebeneinander sich vom Gerät entfernen. Kann die Abgasleitung auch als Abgaskamin über Dach geführt sein, so kann die Zuluftleitung in mehr oder weniger großem Abstand vom Heizgerät nach unten durch den Fußboden verlegt sein. Andererseits besteht auch die Möglichkeit, die beiden Leitungen nebeneinander zu einem Außenwandkasten zu führen, durch den gegeneinander abgeschirmt die Abgase austreten und die Zuluft zugeführt werden können. Bei dem erfindungsgemäß ausgebildeten Heizgerät kann also auch die Zuluftleitung weitgehend unabhängig vom Standort des Heizgerätes angebracht werden. Dadurch, daß der Brenner und eventuell sonstige Armaturen in der Bodenwanne gelagert sein köhnen, läßt sich eine sehr brauchbare und einfache Montageeinheit schaffen, die nicht nur den zusätzlichen Einbau des Heizgerätes, sondern auch spätere Reparaturen wesentlich vereinfacht.

Die Erfindung beschränkt sich nicht auf das dargestellte Ausführungsbeispiel. So kann die Bodenwanne auch selbst mit einem Aufstellboden zum direkten Aufsetzen der Wanne mit dem darauf aufgebauten Heizgerät auf dem Fußboden versehen sein. Die Vorteile der Bodenwanne ergeben sich auch an Heizgeräten, die einen anderen als mäanderförmigen Wärmetauscher aufweisen.

In Zusammenhang mit einem mit einer Bodenwanne versehenen Heizgerät ist es von Vorteil, wenn das in Form eines Pultschauglases ausgebildete Sichtfenster 8 schräg angeordnet ist und dadurch von der Breit- und Schmalseite des Heizgerätes eingesehen werden kann.

Patentansprüche

1. Mit gasförmigem oder vergastem flüssigen Brennstoff befeuertes Raumheizgerät für Kleinräume, insbesondere Wohnwagen, Fahrzeug- und Schiffskabinen od.dgl. mit gegen den zu beheizenden Raum abgeschlossenem, aufwärtsführendem Verbrennungsraum, an den sich ein als Wärmetauscher ausgebildeter Verbrennungsgaskanal anschließt, dessen abwärtsführender Kanalteil mit einer Abgas-Anschlußmuffe endet, dadurch gekennzeichnet, daß der Verbrennungsraum (1) unten von einem Aufsetzflansch (10) begrenzt ist, an diesem eine Bodenwanne (11) mit ihrem Anschlußflansch (12) befestigt ist, diese Bodenwanne zur Aufnahme eines Brenners (16) ausgebildet und mit einer seitlichen Anschlußöffnung (20) für eine Zuluftleitung versehen ist.

2. Heizgerät nach Anspruch 1, dadurch gekennzeichnet, daß die Bodenwanne (11) Zentriereinbauten (15) zur Befestigung des Brenners (16) aufweist.

3. Heizgerät nach Anspruch 1 oder 2, dadurch gekennzeichnet, daß die Anschlußöffnung (20) zum Teil in der Bodenwanne und zum Teil im Verbrennungsraumgehäuse ausgebildet und von einer Zuluft-Anschlußmuffe (21) begrenzt ist.

4. Heizgerät nach einem der Ansprüche 1 bis 3, dadurch gekennzeichnet, daß die Bodenwanne (11) mit einem Aufstellboden zum direkten Aufsetzen des Gerätes auf den Fußboden versehen ist.

5. Heizgerät nach einem der Ansprüche 1 bis 4, dadurch gekennzeichnet, daß zur bodenfreien Lagerung der Bodenwanne (11) eine auf dem Fußboden zu befestigende Grundplatte (25) mit Stützen ( 26), die den Anschlußflansch (12) der Bodenwanne abstützen, vorgesehen ist.

6. Heizgerät nach einem der Ansprüche 1 bis 5, dadurch gekennzeichnet, daß die Grundplatte (25) mit einer verschließbaren Durchbrechung versehen ist.

7. Heizgerät nach einem der Ansprüche 1 bis 6, dadurch gekennzeichnet, daß die Bodenwanne (11) ein Kondenswasser-Ablaufrohr (23) aufweist.

8. Heizgerät nach einem der Ansprüche 1 bis 7, dadurch gekennzeichnet, daß das Pultschauglas (31) schräg gestellt ist.